# EUROPEAN PATENT SPECIFICATION

(11) **EP 4 028 325 B1**
(45) Date of publication and mention of the grant of the patent: **25.03.2026**
(21) Application number: 21843553.5
(22) Date of filing: 02.06.2021
(51) Int. Cl.: B64U 101/30, G08G 5/22, G08G 5/26, G08G 5/55, G08G 5/76, G08G 5/80, G01S 19/15, G01S 19/45, G01S 19/46, H04L 67/12, H04L 67/00, H04W 64/00

(54) **UNMANNED AERIAL SYSTEM COMMUNICATION**
KOMMUNIKATION EINES UNBEMANNTEN FLUGSYSTEMS
COMMUNICATION DE SYSTÈME AÉRIEN SANS PILOTE

(30) Priority: 15.07.2020 US 202063052145 P; 15.07.2020 US 202063052170 P; 11.11.2020 US 202063112543 P; 11.11.2020 US 202063112549 P; 19.11.2020 US 202063115973 P; 18.05.2021 US 202117323458
(43) Date of publication of application: 20.07.2022
(73) Proprietor: Tencent America LLC, Palo Alto, California 94306 (US)
(72) Inventor: ZHAO, Shuai, Palo Alto, California 94306 (US); WENGER, Stephan, Palo Alto, California 94306 (US); LIU, Shan, Palo Alto, California 94306 (US)
(74) Representative: Gunzelmann, Rainer
(86) International application number: PCT/US2021/035384
(87) International publication number: WO 2022/015426

(56) References cited:
- WO-A1-2018/203120
- WO-A1-2019/050500
- WO-A1-2019/050500
- US-A1- 2016 285 774
- US-A1- 2016 300 492
- US-A1- 2018 150 075
- US-A1- 2018 375 568
- US-A1- 2020 120 563
- ZENG YONG; ZHANG RUI; LIM TENG JOON: "Wireless communications with unmanned aerial vehicles: opportunities and challenges", IEEE COMMUNICATIONS MAGAZINE., IEEE SERVICE CENTER, PISCATAWAY., US, vol. 54, no. 5, 1 May 2016 (2016-05-01), US , pages 36 - 42, XP011610415, ISSN: 0163-6804, DOI: 10.1109/MCOM.2016.7470933

## Description

### FIELD

This disclosure relates generally to field of aviation, and more particularly to unmanned aerial systems.

### BACKGROUND

Unmanned aerial vehicles (UAVs) have become considerably easier to fly, which in turn has made them popular not only with professional UAV pilots and determined and affluent hobbyists, but also the general public. As a result, millions of UAV are now sold every year compared to a few thousand-if that many-model helicopters some 15 years ago. At the same time, the knowledge, proficiency, and engagement of the user community, on average, has decreased.

### SUMMARY

According to an aspect of the presently claimed invention, a computer-implemented method of controlling an unmanned aerial vehicle (UAV) during a handoff between UAS service suppliers (USS) is provided, according to appended claim 1.

According to another aspect, an unmanned aerial vehicle (UAV) is provided, according to appended claim 2.

According to yet another aspect, a non-transitory computer readable medium having stored thereon a computer program for controlling an unmanned aerial vehicle (UAV) is provided, according to appended claim 3.

### BRIEF DESCRIPTION OF THE DRAWINGS

These and other objects, features and advantages will become apparent from the following detailed description of illustrative embodiments, which is to be read in connection with the accompanying drawings. The various features of the drawings are not to scale as the illustrations are for clarity in facilitating the understanding of one skilled in the art in conjunction with the detailed description. In the drawings:
Fig. 1 is a schematic illustration of an Unmanned Aerial System.
Fig. 2 is a schematic illustration of an Unmanned aerial system communication with a UAS service system.
Fig. 3 is a schematic illustration of UAV charts.
Fig. 4A is a schematic illustration of an UAS compatible with embodiments of the presently claimed invention.
Fig. 4B is a schematic illustration of an UAS compatible with embodiments of the presently claimed invention.
Fig. 4C is a schematic illustration of an UAS compatible with embodiments of the presently claimed invention.
Fig. 5A is a schematic illustration of a RESTful position query and a JSON reply compatible with embodiments of the presently claimed invention.
Fig. 5B is a schematic illustration of a HTTP query and HTML reply compatible with embodiments of the presently claimed invention.
Fig. 6 is a schematic illustration of an UAS compatible with embodiments of the presently claimed invention.
Fig. 7 is a schematic illustration of a UAE (UAS Application Enabler) and SEAL architecture's workflow and reference points
Fig. 8 is a schematic illustration of a computer system compatible with embodiments of the presently claimed invention.
Fig. 9 illustrates a high-level procedure of SIP session management based on network resource requirement.
Fig. 10 illustrates the high-level procedure of the SEAL-NRM server to request additional bandwidth for a particular SIP session.
Fig. 11 illustrates a high-level procedure of UAV CAA-level ID using the SEAL group manager.
Fig. 12 illustrates another high-level procedure of UAV CAA-level ID using the SEAL group manager.
Fig. 13 illustrates a high-level procedure for UAV group creation using the SEAL group manager.
Fig. 14 an operational flowchart illustrating the steps carried out by a program that controls an unmanned aerial vehicle (UAV) compatible with embodiments of the presently claimed invention.

### DETAILED DESCRIPTION

Detailed embodiments of the claimed structures and methods are disclosed herein; however, it can be understood that the disclosed embodiments are merely illustrative of the claimed structures and methods that may be embodied in various forms. Those structures and methods may, however, be embodied in many different forms and should not be construed as limited to the exemplary embodiments set forth herein. Rather, these exemplary embodiments are provided so that this disclosure will be thorough and complete and will fully convey the scope to those skilled in the art. In the description, details of well-known features and techniques may be omitted to avoid unnecessarily obscuring the presented embodiments.

As previously described, UAVs have become considerably easier to fly, which in turn has made them popular not only with professional UAV pilots and determined and affluent hobbyists, but also the general public. As a result, millions of UAV are now sold every year compared to a few thousand-if that many-model helicopters some 15 years ago. However, there is currently no mechanism for a UAV to select a service supplier, handle service handoff when switching to different service suppliers, detect flight rule deviation, or report back to UAS service providers (USS/UTM). It may be advantageous, therefore, to specify how and what information is transferred, to identify the key factors for flight rule violation, and to provide a technical method for communicating with USS/UTM for improved safety during UAV operations.

Aspects are described herein with reference to flowchart illustrations and/or block diagrams of methods, apparatus (systems), and computer readable media according to the various embodiments. It will be understood that each block of the flowchart illustrations and/or block diagrams, and combinations of blocks in the flowchart illustrations and/or block diagrams, can be implemented by computer readable program instructions.

All but perhaps the smallest UAVs can present a hazard to manned aviation, not only through mid-air collisions, but also due to pilot distraction, saturation of Air Traffic Control (ATC) resources, and so on. The combination of potentially thousands of UAVs flying simultaneously during certain days, and the (on average and when compared to pilots of manned aircraft) underskilled, undereducated, underinformed, and occasionally reckless UAV pilots, has led to millions of dollars spent on aborted takeoffs, missed approaches, reroutes, grounded manned aircraft, property damage through, for example, wildfires that could not be fought by manned aerial resources, and so forth. There have been reports of lives claimed by the effects of in-air collisions between amateur-piloted UAVs and helicopters. For these and other reasons, regulatory authorities including the United Nations' International Civil Aviation Organization (ICAO) and the United States' Federal Aviation Administration (FAA) have started to regulate UAVs, including smaller UAVs weighting less than 55 pounds. Heavier UAVs have historically been regulated already.

In the US, one aspect of such regulation is the requirement for a pilot carrying a "Remote Pilot Certificate" when conducting substantially all commercial (for hire) UAV operations. The certificate is not primarily targeted towards the mechanical aspects of flying an UAV, but rather towards an understanding and the observance of regulations including, for example, airspace, flight restrictions, and so forth. While a commercial remote pilot may, through obtaining the certificate, be aware of his/her obligations with respect, among other things, observance of rules and regulations of UAV operations, including airspace, a hobbyist may not be sufficiently aware. UASs have become so cheap and easy to operate that the historical way of achieving competency through model aircraft clubs and similar organizations does not reliably work anymore either. For example, a substantial number of UAVs are operated away from the flying fields model aircraft clubs maintain, by individuals who were never a member of such a club and likely have never studied pertaining regulation, let alone got a briefing regarding the current layout of the airspace.

Another aspect that is proposed for regulation includes the identification of UAVs and their flights to ATC, other UAVs, and so forth. In the US, a "proposed rule" has been issued by the FAA (https://www.federalregister.gov/documents/2019/12/31/2019-28100/remote-identification-of-unmanned-aircraft-systems). The proposed rule, when implemented by substantially all UASs, will give ATC a certain insight in UAV activity at any given moment in time. It further requires the UAS to be equipped to inform the pilot if the reporting mechanism between the UAS and the systems interfacing with ATC, known as UAV Service Suppliers (USS), is inactive while the UAV is airborne. However, contrary to many operations of manned aircraft in controlled airspace that require the flight crew to be in (voice) contact with ATC, squawk transponder codes, and so forth, no such requirement is envisioned in the proposed rule, nor would it likely be practical without a substantial increase in ATC resources. Insofar, while the FAA through USSs may be able to obtain a certain amount of real-time knowledge of active UAV operations, the "proposed rule" does not envision direct (through technical means) or indirect (through communication with the pilot) influence of the UAV's flight by ATC. Instead, the proposed rule targets informing ATC about UAV operations pertaining to ATC's mission.

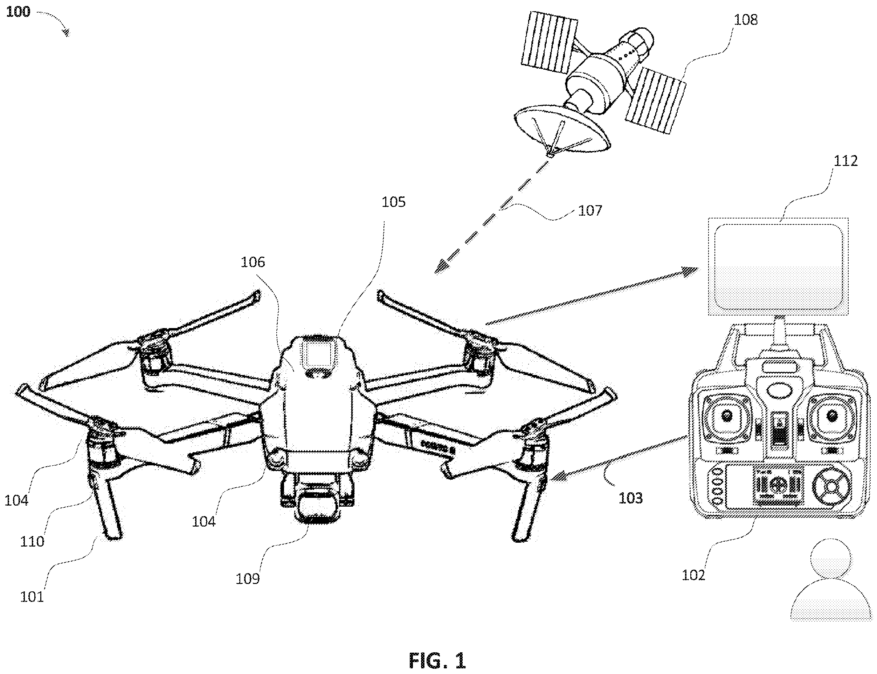

Referring to FIG. 1, an Unmanned Aerial System (UAS) can comprise an unmanned aerial vehicle (UAV) (101) and a controller (102). The controller (102) can use a data link (103) to communicate control commands from the controller (102) to the UAV (101). In its simplest form, the controller can be an VHF, UHF, or other wireless technology analogue or digital radio conveying, for example power levels to the engines (104) of the drone or the control surfaces of a model aircraft (not depicted). More abstract commands like pitch, yaw, and roll, similar to those of helicopters or aircraft can also be used. An experienced pilot can operate some UAVs with those basic controls, not relying on any advanced onboard processing of control signals inside the UVA. In the form of model helicopters and aircraft, such UAVs have been available for many decades.

Advances in onboard electronic designs more recently allowed to offload certain tasks from the human operator to the UAV itself. Many UAVs, today, include sensor(s) (104) that indicate to the onboard controller circuit (105) for example the attitude as well as the acceleration of the UAV. Onboard controller can be a computer system with a scaled-down or non-existent user interface. The information obtained by the sensor(s) (104), in addition to the control inputs received from the data link (103) from the controller (102), allows the UAV to remain stable unless positive control input is obtained from the controller.

Even more recently, UAVs can include a receiver (106) to one of the Global Navigation Satellite Systems (GNSS), such as the Global Positioning System (GPS) operated by the United States (shown here as a signal (107) from a single satellite (108), although a minimum of three, and typically four or more line-of-sight satellites are used to triangulate the position of the UAV in space). A GNSS receiver can determine with fair accuracy the position of the UAV in space and time. In some UAVs, the GNSS can be augmented by additional sensors (such as an ultrasonic or lidar sensor) on the, in many cases, most critical vertical (Z-) axis to enable soft landings (not depicted). Some UAVs (101) including GNSS capability offer the user "fly home" and "auto-land" features, where the UAV, upon a very simple command from the controller (102) (like: the push of a single button), or in case of a lost data link (103) from the controller or other timeout of meaningful control input, the drone flies to a location that was defined its home location. The receiver 106 may also be configured to detect location through a cellular network, such as 3G, 4G, or 5G, or by wireless fidelity (Wi-Fi) Internet access.

As another recent development, some UAVs also include at least one camera (109). In some UAVs a gimbal-mounted camera can be used to record pictures and video of a quality sufficient for the drone's users-today, often in High Definition TV resolution. Some UAVs include other cameras (110), often covering some or all axis of movement, and onboard signal processing based on these camera signals is used for collision avoidance with both fixed and moving objects.

In some UAVs, the camera signal of the "main" camera (109) can be communicated (111) in real-time towards the human user, and displayed on a display device (112) included in, attached to, or separate from the controller (102). This has technically enabled UAVs to be successfully flown out of line-of-sight of the human pilot, using a technique known as "First Person View" or FPV.

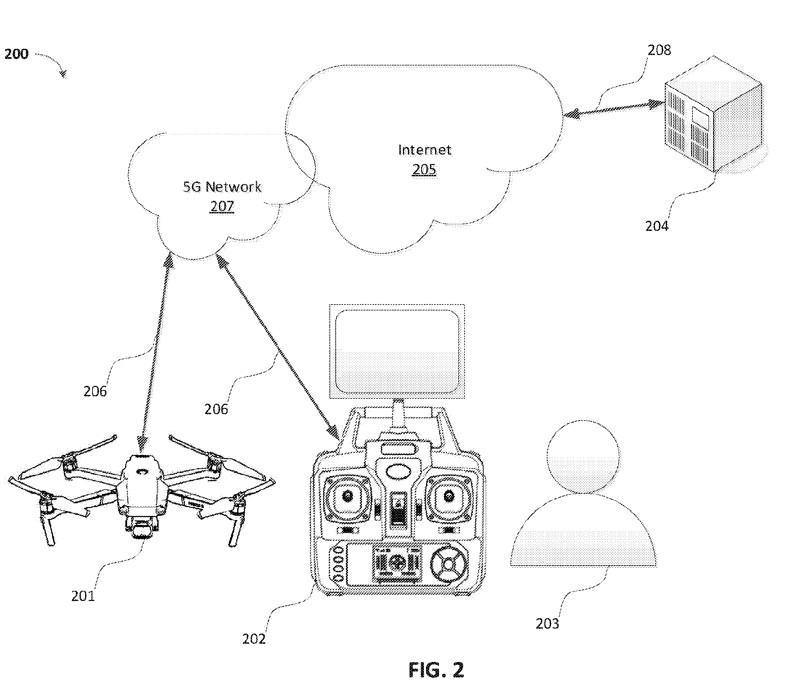

Referring to FIG. 2, one option for the UAS comprises an UAV (201) and a Controller (202), potentially operated by the human pilot (203) to inform one or more USSs (204) (only one depicted) about the position of the UAV (201) in real-time in accordance with the "proposed rule". The reporting can be conducted using the Internet (205). For all but the most exotic use cases involving tethered UAVs, that implies a wireless Internet connection (206) over wireless network such as a 5G network (207) to the UAS (UAV (201), Controller (202), or both), and the USS (204) also having an Internet connection (208). Such a scenario may be assumed in the proposed rule, and is assumed herein as well. However, other networks than the Internet (205) may also be used. For example, conceivably, a closed wireless network that is not the Internet could be used to communicate between UAS and USS. This is what is used today for certain military UAVs. When referring to the "Internet" henceforth, such networks are meant to be included.

Many physical wireless network technologies have been proposed, deployed, and/or are in use that enable wireless Internet connections (206) and wireless networks (207) to connect systems such as an UAS Controller (202) or an UAV (201) to the Internet (205). For outdoor applications, one choice can be the use of mobile networks, for example their most recent incarnation known is 5^{th} Generation or "5G" networks. Henceforth, the use of such an 5G network is assumed. However, other physical network technologies can equally be employed, including for example, 3G, 3.5G, 4G, LTE mobile networks, wireless LAN in infrastructure or ad hoc mode, zig-bee, and so on. In the context of this disclosure, the mobile network carrying the Internet can offer bi-directional communication, such as, for example, from the UAS to the USS. The quality of service in each direction may differ however.

One key observation taken from FIG. 2 can be that the links (206) between the Internet (205) through a 5G network (207) to UAV (201) or controller (202) can be bi-directional. When using Internet protocols such as IP, TCP, UDP, HTTP, QUIC, and similar, for the communication between UAS and USS (as envisioned by the proposed rule), then by the nature of such protocols a bi-directional link can be a necessity for those protocols to work. Further, the proposed rule includes a requirement that the human pilot (203) be informed, presumably by the controller (202) or the UAV itself (201) of the case of communication loss between the UAS and the USS (204), which can be perhaps most easily achieved through a data link between USS (204) and the UAS-which in turn would imply bi-directional links (206). It is assumed henceforth that links (206) are bi-directional for those reasons.

Air traffic control (ATC) authorities such as the FAA, or government or private authorities or entities tasked by the ATC authorities have for decades issued not only regulations but also various forms of graphic, textual, or verbal information regarding the layout of the airspace in which (manned and unmanned) aircraft operate. Historically at various times available in the form of printed charts, weekly publications, and textual information available through fax or being read over the telephone or in person by a flight service specialist, relevant information is now, in most countries including the US, available over the Internet, albeit from various sources. With respect to the disclosed subject matter, relevant can be at least the following information:

Charts: many different types of aeronautical charts are available in different countries and for different purposes (low/high altitude, visual/instrument flight rules, planning, etc.). For the operation of small UAVs, of particular relevance are the US "sectional charts, as well as the "Low Altitude Authorization and Notification Capability" ("LAANC") information, which is displayed in the form of a chart on a web browser. Charts are updated on a comparatively long-term cycle (for example; VFR sectional charts: every six months). For manned aircraft, the use of the "in force" charts i-s required.

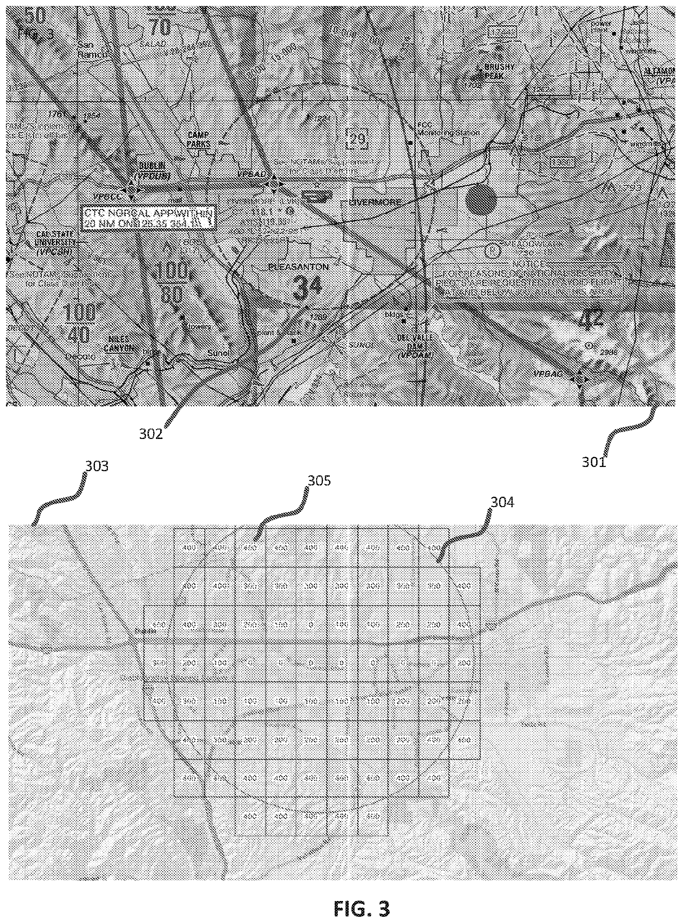

Referring to FIG. 3, shown is an excerpt of a sectional chart centered around Livermore Airport in California (301). It should be noted that sectional charts are colored, and the color carries significance; the black-and-white represented used herein is, however, sufficient to show the difficulties a recreational UAV pilot may have in interpreting sectional charts. The dashed cycle (approximately 8 miles in diameter) around the airport (302) indicates "Class D" airspace at certain times (when the toward of Livermore airport is open), which can imply that no (manned) aircraft operation is allowed inside this circle and up to a certain altitude without prior approval by ATC. Historically, the same rule applied to UAVs, which resulted in UAV in most parts of Livermore township (to the east/right of Livermore airport) and surrounding areas were illegal.

Recognizing the requirements for manned aircraft operations were perhaps overly restrictive for recreational drones, the FAA has recently allowed flying recreational drones in certain parts of controlled airspace. Still referring to Fig. 3, shown is a screenshot of an "UAV chart" as issued from the FAA electronically over the Internet, and displayed in a web browser. Again, colors in these charts are significant, but the black/white representation is sufficient to show the important aspects of the chart. Shown again is the 8 mile circle around Livermore airport, in the original depicted in blue. Areas covered by the circle (indicative of controlled airspace), are covered by rectangular blocks, such as block 305. Each such block is around one square mile in size. Each block contains a number which is indicative of the maximum allowed altitude an UAV is allowed to fly within the block without prior permission. Mechanisms (in the form of apps) are in place that allow certain UAV operators to obtain permission to fly higher than that ceiling with reference to the block identifier.

Notice to Airmen (NOTAM): these textual notices, following an internationally recognized standardized format and written in plain English can be issued quickly - within minutes or hours-unlike charts that have update cycles measured in weeks and months, but their valid time can be varying from hours to "indefinitely" or "until further notice". One of many purposes of NOTAMs can be to update certain aspects of charts. For example, aeronautical charts can include information about navigation obstacles such as high towers. When a temporary crane gets erected that is higher than a certain threshold (which is determined, among other factors, by the closeness of the site to the approach path of existing airports), they may constitute a navigation hazard and as such their existence, location, height, and anticipated duration of existence is made available in the form of NOTAMs. An example for a NOTAM advertising the presence of a crane in the vicinity of an airport (San Carlos, KSQL) may look as follows:
KSQL SAN CARLOS
!SQL 10/003 SQL OBST CRANE (ASN 2018-AWP-13591-OE) 372917N1221327W (1.9NM SE SQL) 309FT (300FT AGL) FLAGGED AND LGTD 1910072355-2001312159 CREATED: 07 Oct 2019 23:55:00
SOURCE: SQL

Temporary Flight Restrictions (TFRs): TFRs are a form of a NOTAM that can inform a pilot or crew of airspace where special ATC permission may be required to enter. TFRs can be announced well in advance (for example to cover areas above long-planned sports events), or issued in real time (for example in case of wildfires). Shown below is an example of a TFR that could be related to a fire or similar hazard; the TFR is valid only for a single hour: FDC 9/1767 ZMP MN..AIRSPACE HIBBING, MN..TEMPORARY FLIGHT RESTRICTIONS WI AN AREA DEFINED AS 2 NM RADIUS OF 472601N0930200W (HIBBING VOR/DME HIB299015.6) SFC-4500FT BLASTING. PURSUANT TO 14 CFR SECTION 91.137(A)(1) TEMPORARY FLIGHT RESTRICTIONS ARE IN EFFECT. ONLY RELIEF ACFT OPS UNDER DIRECTION OF HIBBING TACONITE ARE AUTH IN THE AIRSPACE. HIBBING TACONITE TELEPHONE 218-262-5940 IS IN CHARGE OF ON SCENE EMERG RESPONSE ACT. MINNEAPOLIS /ZMP/ ARTCC TELEPHONE 651-463-5580 IS THE FAA CDN FACILITY. 2001031630-2001031730

In the US and in many other countries, all above information can be obtained in digital format. In the US, such access can be free of charge. The data format of above information is standardized, published, and quite compact. All aforementioned US data pertaining to a given day may fit into 16 GB.

FAA is transitioning the NAS to Performance Based Navigation (PBN), which primary uses satellite navigation in the form of the Global Navigation Satellite System (GNSS). GPS (Global Positioning System) is one of the methods of GNSS. It is a system used for worldwide navigation and surveying. The GPS system makes use of the geographical lines of latitude and longitude to provide coordinates for a person's location or a place of interest. Lines of latitude are horizontal lines that stretch from east to west across the globe. The longest and main line of latitude is called the Equator. The Equator is represented as 0° latitude. Lines of longitude are vertical lines that stretch from the North Pole to the South Pole. The main line of longitude is called the Prime Meridian. The Prime Meridian is represented as 0° longitude. Most locations on the Earth do not fall along the lines of latitude or longitude, but within the shapes created from the intersection of the horizontal and vertical lines.

In order to accurately pinpoint a human being on the Earth's surface, the lines of latitude and longitude are further divided and expressed in one of the three common formats: Degrees, minutes, and seconds (DMS). The common way to represent a GPS coordinator may be use the format of a pair of Latitude (N/S) and Longitude(E/W). N(orth)/S(outh) may be placed at the end of each DMS to represent if it is either on the North or South of the Equator. E(ast)/W(est) may be placed at the end of each DMS to represent if it is either on the left of Prime Meridian or right of Prime Meridian. The space between each line of latitude or longitude representing 1° is divided into 60 minutes, and each minute is divided into 60 seconds. A concrete example may look like (25°24'10.1"N, 20°15' 16.5"E).

It has already been pointed out that interpreting airspace using traditional means designed for manned aircraft is difficult and requires a certain amount of training. While the FAA increasingly makes available simplified charts (like the UAV chart 303), apps, and other tools designed for non-professionals, even those tools continue to be difficult to operate, and, perhaps more importantly, require the UAV pilot to actually consult them before flying his/her UAV. The many recent incidents related to UAVs in controlled airspace clearly indicate that not all UAV pilots do so.

Further, especially with relatively small UAVs, it is hard for an untrained (or even trained) UAV pilot to gauge the altitude his/her UAV is flying. For example, how does an UAV pilot know his/her small UAV is 90 ft in altitude (which may be legal in certain areas as indicate by the UAV chart) or 110 ft (which may be illegal)? Technical means built into UAV (201) or controller (202) may be helpful to solve either problem.

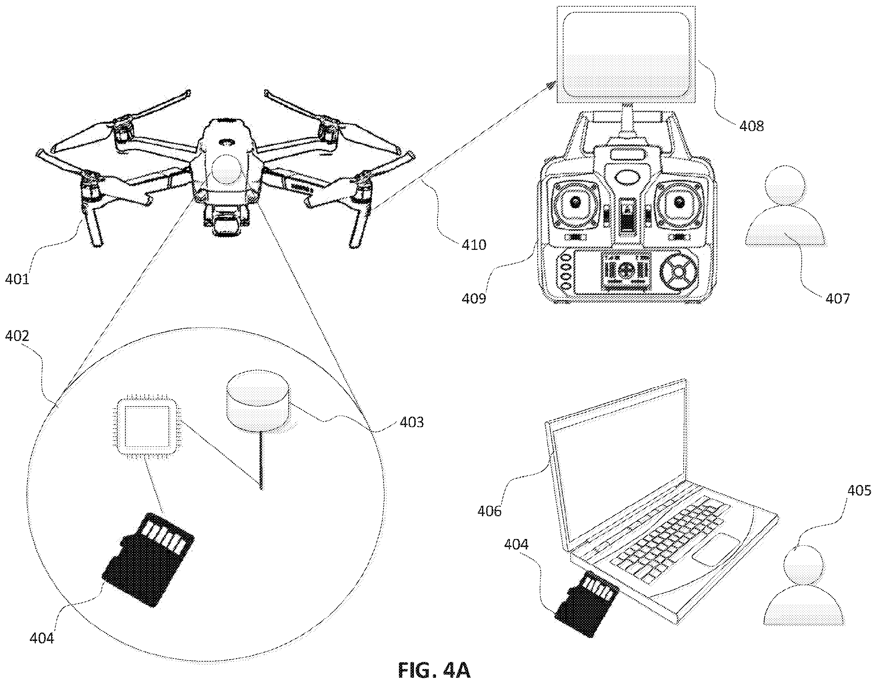

Referring to FIG. 4A, in an example compatible with embodiments of the presently claimed invention, an UAV (401) may be equipped with an embedded computer system (402), with the exception of most user interface components. The embedded system may advantageously (for space and weight reasons) be part of or integrated into the UAV's onboard flight control circuitry. The system (402) may have a mechanism to obtain its location in three-dimensional space. Depicted here is a GPS antenna (403) that, together with a GPS receiver, may be one example of such mechanisms. Other mechanism could be a combination of GPS with (potentially more accurate) barometric altitude sensors, a triangulation mechanism to determine a lateral position from ground-based navigation tools (VORs, cell phone towers, etc.), and so forth. The UAV (401) may also include a storage mechanism (404) accessible by the user of the UAV. Depicted here, as an example, is a micro-SD card (404). However, the storage could also be other changeable semiconductor storage, onboard NV-RAM in the UAV that is accessible through a network plug from a computer or wireless LAN, and so forth.

The storage (404) may be of sufficient size, and may store information pertaining the airspace the UAV may operate in. Such information may comprise digital representations of charts, NOTAMs, TFRs and so forth. The digital information may be interpreted by the embedded computer systems and may be correlated with the position of the drone in three dimensions (including lateral position and altitude). The result of the correlation process may be that the UAV is "legal to fly" or "not legal to fly" in the airspace it is currently occupying. Optionally, other results may also be possible, such as "legal to fly but approaching the legal airspace boundary", "legal to fly but will be illegal within 10 seconds if course is not altered" and so forth.

In the same or another example, the digital information in memory (404) may be loaded by human user (405) or an automated process through a personal computer, tablet, or similar device (406), over for example the Internet, from sources such as the airspace authority or a designated service provider.

In order to minimize storage requirements, the digital information may be restricted such that it only pertains to certain areas. For example, the digital information may only contain chart data in a radius of 100 miles around an intended flying site that the user (405) may have preselected when downloading the chart data onto the memory (404).

In the same or another example, the result of the correlation process may be communicated to the UAV pilot (407). One possible option may be to use a data link (410) between UAV and controller to communicate a signal codifying the result of the correlation, and inform the pilot (407) through tactile, visual, text, or auditory warnings through the controller or the UAV. For example, the pilot may be notified by vibration of the controller (409), a visual signal such as a warning light (not depicted), an auditory warning sound played through a speaker (not depicted), or a message on the screen (408) that may be attached to the controller. Presumably, a data link (410) is available as it may be required under the proposed FAA rule anyway. If however, no such data link were available for whatever reason, a UAV can alternatively or in addition include onboard mechanisms that allow it to inform the pilot of the result of the correlation process. For example the UAV may include speakers or ground-visible warning lights. As another example, the UAV may "bob" (rapid oscillating vertical motion).

The UAV may be configured to take one or more actions based on determining the potential violation or if the operator ignores the warnings of the potential violations. For example, the UAV may land immediately, return to the operator, hover at its current location, or travel to a location where there is no potential violation.

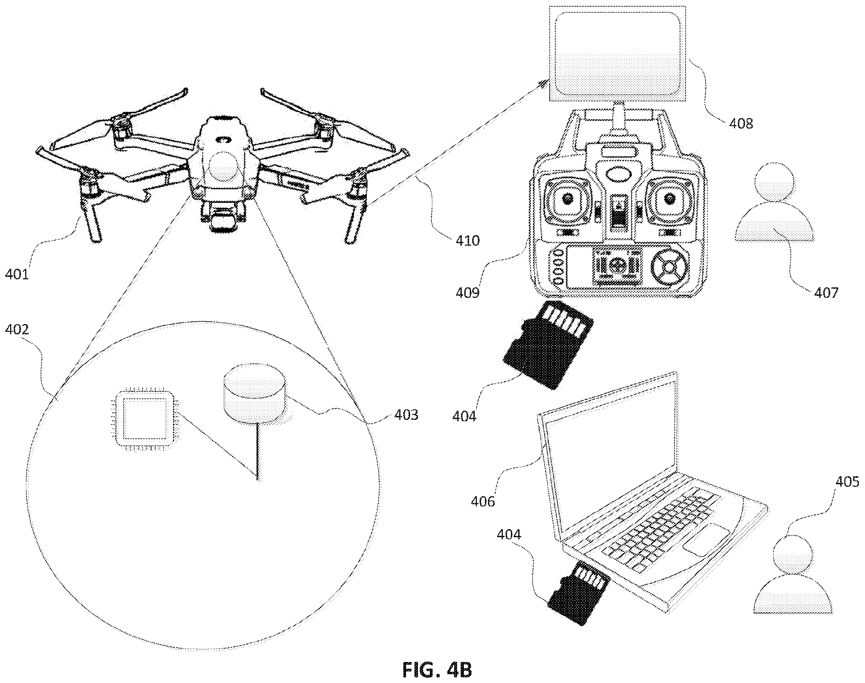

Referring to FIG. 4B, an alternative implementation may shift the computational burden from the UAV itself to the controller (409). The controller (409), in this case, may have access to memory (404), and performs aforementioned correlation based on position information sent by the UAV (401) over the data link (410).

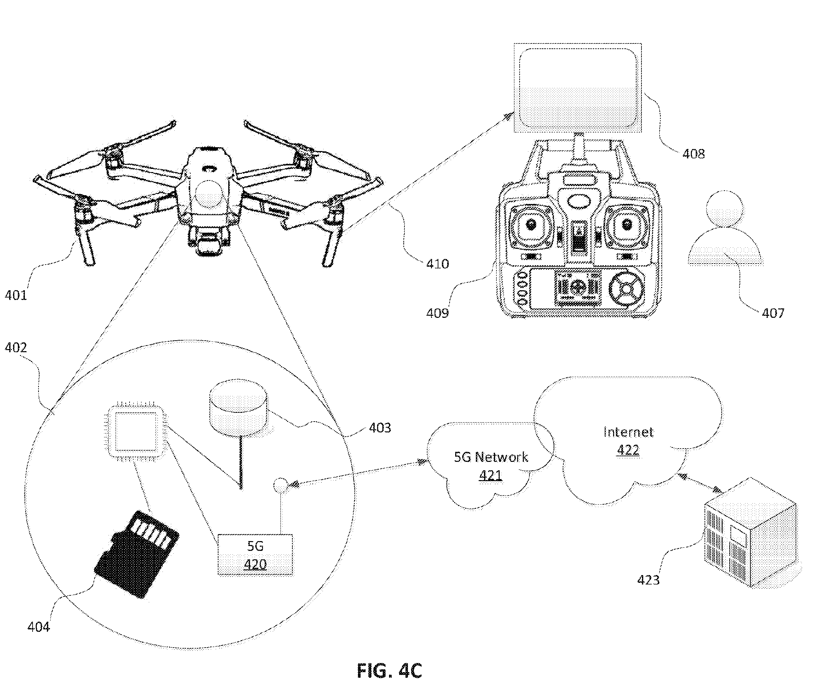

Referring to FIG 4C, in an example compatible with embodiments of the presently claimed invention, the UAV may be further equipped with a (wireless) network interface (420), for example a 5G network interface, that allows the UAV to access, through a wireless network (421) (for example the 5G network) and the Internet (422), an USS (423) or similar server operated by relevant authorities over airspace, or designates thereof. During power-up, pre-flight, or flight, the UAV (401) may query the USS (423) for one or more of the following:
- charts, in case the onboard charts in storage (404) for the relevant area are not current (aeronautical charts carry an expiration date); the charts pertaining to the geographical location as obtained from the GPS (403) or other georeference data, including a reasonable radius around the UAV's current location where the reasonable radius may be calculated by the endurance (maximum flight time) of the UAV, its maximum speed, and a safety factor to accommodate for wind and other environmental factors;
- NOTAMs pertaining to a similar area;
- TFRs pertaining to a similar area;
- other information relevant for the flight, for example weather/wind data.

Information received using aforementioned mechanism can be integrated with the onboard info in storage (404) and used as described later.

Details of the protocols used for the communication between UAV (401) and USS (or other servers) depend on the services offered by the USS (423). Historically, NOTAMs and/or TFRs, as an example, were available in files covering geographic areas of air traffic control centers (several US states in size). A UAV may request the file corresponding to the state it is operating in (as identified by GPS location and an onboard chart), download the pertinent textual NOTAM file (which can be a few ten or perhaps 100 Kbyte in size) using protocols such as ftp, or http, parse the file for relevant information, and integrate the information found with the onboard chart info in storage (404). Such a process can occur at least once before the flight, but also several times during the flight, for example in 1-minute or 5-minute intervals. This is practical due to the comparatively small file size, albeit inefficient when compared to other access mechanisms as described below.

More recently, airspace authorities including the FAA have implemented modern query interfaces that allow automated download of information pertinent to a specific location with a granularity much finer than a state. These interfaces can be based on RESTful operations. REST, also known as Representational State Transfer, is a technique in which a client can query a server identified by a base Unified Resource Indicator (URI) through standard HTTP method including, for example, GET, POST, PUT, PATCH, or DELETE and in a defined format. One such defined standardized format is known as Java Object Notation or JSON.

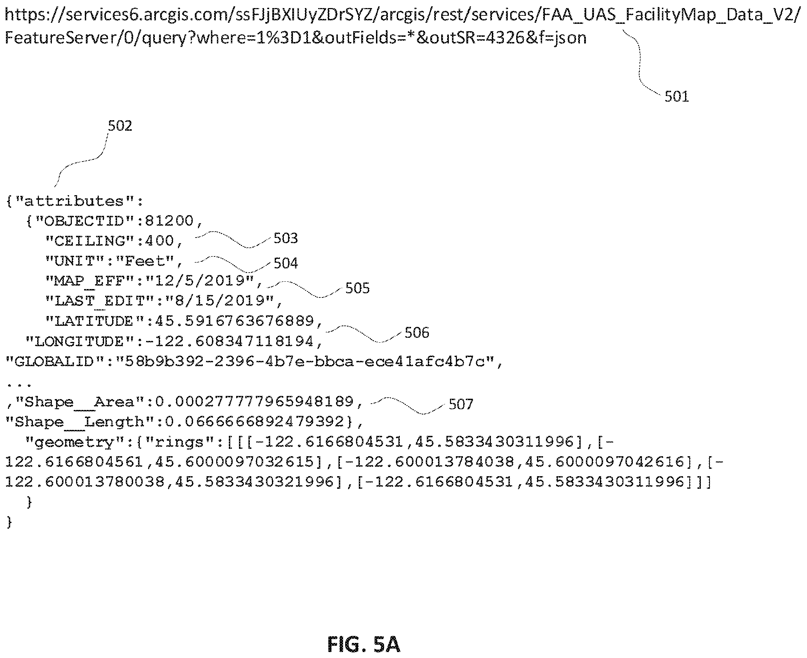

Referring to FIG. 5A, a RESTful query (501) to an FAA-designed USS server pertaining to a UVA chart, and the JSON-coded response (502) of the server is depicted. In this case, the response indicates information such as the "ceiling" (503) in units of feet (504) (maximum allowed altitude for the UAV), the effective (505) and last edit (505) date of the chart (from which the expiration date can be derived), and the location (506) and shape (507) of the spatial area to which the ceiling (503) applies.

Queries for TFRs, NOTAMs, or other real-time updated information can have similar formats. Due to the comparatively small size of both query messages and replies and the comparatively low computational requirements for processing such messages when compared to parsing text files of many Kbyte in size, such a query mechanism can be more suitable for an UAV compared to full file download and parsing. There are arguably also no privacy concerns as, according to the proposed rule, an UAV needs to inform an USS about its position anyway.

After having obtain updates to the chart information stored in storage (404) in accordance with any of the above described mechanisms or any other suitable mechanisms, in the same or another embodiment, the result of the correlation process may be communicated to the UAV pilot (409).

A UAV may need to obtain authorization from USS/UTM before takeoff, using any means of network communication such as wireless technology like 3G/4G/5G. The authorization obtained may include but not limit to standby, allowing for takeoff with following up instruction, or not allowing for takeoff, maybe in a specified time frame. Once it is airborne, a UAV may only connect to a single USS/UTM for traffic advisory for the purpose of monitoring traffic, weather update and status update.

According to the presently claimed invention, while a UAV is enroute, following a pre-defined fly path, there may be a need to switch to a different USS/UTM due to service converge from the initial USS/UTM. The instruction may be obtained during takeoff clearance or updated after airborne. This switch is called a handoff when a UAV change its flight service to a different service supplier or traffic controller. During the handoff phase, a few data may need to be updated to the new USS/UTM service supplier. Similarly, new instruction data may be sent to the UAV proactively. The following data transfer may include the current location, altitude, speed, destination, power setting, and onboard equipment list such as barometers and payload.

At any time, a UAV might operate outside of the limit which were assigned by USS/UTM due to either known or unknown reasons such as weather causing the UAV to fly off-course, onboard GPS failure causing loss of directional control, data link communication failure causing inability to transfer and receive instruction message from USS, erroneous indicated airspeed causing miscalculation of fly time, misinterpreted airspace causing entry into a dangerous or prohibited fly zone such as a TFR, erroneous altitude indicator causing the UAV to fly into unsafe area, or excessive power usage causing the UAV to run out of range. To be able to identify an erroneous UAV fly data and mismatch with the instructions with USS may be enforced for a safe operation. Table 1 lists the possible data format.

**Table 1**

| **Properties** | **Parameter options** | **Description** | **Data Type** | **unit** | **Precision** |
|---|---|---|---|---|---|
| | **M(andatory), O(ptional)** | | | | |
| Altitude | M | UAV current Altitude : AGL | Int | meter | single digit |
| Speed | M | UAV travel speed | Int | Knot/hr | single digit |
| GPS coordination | M | The Geometry data for each ceiling and floor ring | DMS | **Float** + String | second |
| Power | O | The usable power (ex : battery percentage) | Float | Percentage | Two decimal point |
| Destination | O | Current airspace allocation | String | String | N/A |
| Equipment | O | Onboard equipment list such as payload | Sring | String | N/A |

As mentioned above, the FAA has implemented RESTful operations for retrieving NOTAM/TFRs data. The returned data is in a standardized format is known as Java Object Notation or JSON. If a UAV is able to follow the instruction received from USS/UTM, an ACK message is sent back for acknowledgement. In any case, if a UAV cannot follow the instruction from the USS, a feedback message is sent back to report any misalignment.

Recently ASTM's (American Society for Testing and Materials) publication regarding unmanned aircraft remote ID also uses JSON and XML as data transfer format. It is important to follow the major regulation and standardization committee for data transfer format. An ACK message is sent as following using JSON format. A Feedback message for any misalignment is sent as following using JSON format. A supplemental data may be added for additional information to USS/UTM.

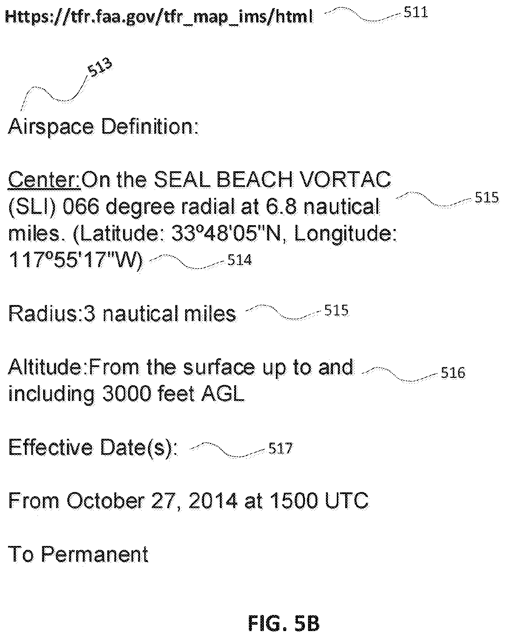

Fig. 5B shows the a TFR/NOTAM query (511) using HTTP GET method against USS (423) near Disneyland park in California, the HTTP based NOTAM response (513) with text translation. In this case, the response indicates information such as NOTAM latitude and longitude (514), radius (515), Altitude (516) and effective date (517). Such information is a key area indication where and when UAV was restricted to fly into.

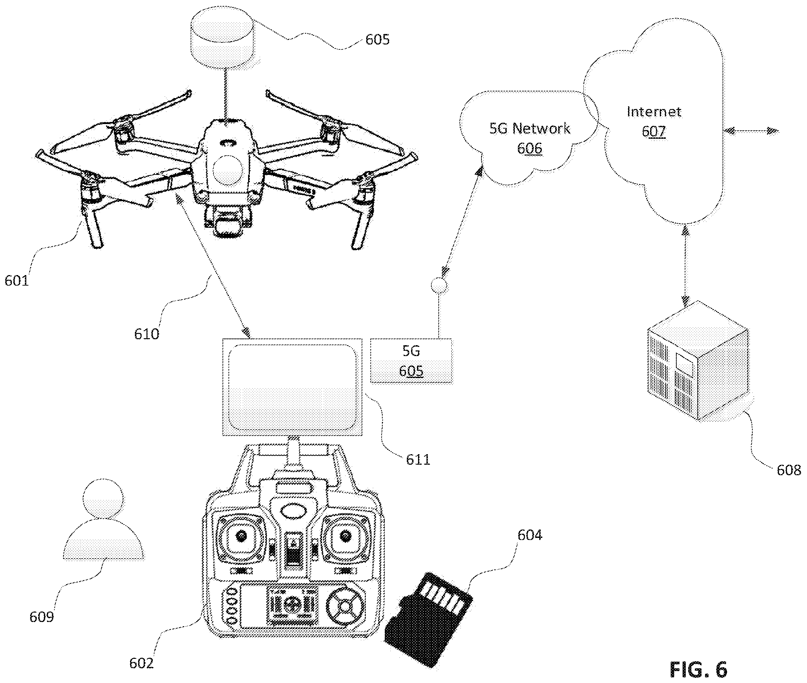

Referring to FIG. 6, an alternative implementation may shift some the computational burden from the UAV (601) to the controller (602). The controller (602), in this case, may have access to memory (604) with (potentially updated) chart data, and may perform aforementioned correlation based on position information (as obtained by onboard GPS (605) sent by the UAV (601) over the data link (610). The chart data may be updated using any suitable mechanisms including the ones described above, through its wireless network interface (605), for example 5G interface, a wireless network 606) such as the 5G network, the Internet (607), to an USS (608). The result of the correlation (i.e. legal or not legal to fly) may become available locally at the controller (602), and may be communicated by the controller (602) to the human UAV pilot (609) by, for example, a visual signal (light, not depicted), a message on the controller's screen (611), a vibration alert, or other suitable mechanisms. As the controller (602) controls the UAV (601), the signals may also be made visible by the UAV (601) itself, for example by a light signal attached to the UAV (601) or by the UAV "bobbing". Doing so can have advantages as the UAV pilot (609) may be concentrated on the UAV (601) itself rather than the user interface of the controller (602).

Presumably, the UAV may have conducted pre-flight check, specially chart data queried from national airspace charts and saved in UAV onboard storage system. Referring again to FIG. 4, the initial obtained chart information may be stored in storage (404) in accordance with any of the above described mechanisms or any other suitable mechanisms, in the same or another embodiment, the result of the correlation process may be communicated to the UAV pilot (409).

The communication link described above either a GPS antenna (403) or a wireless network interface (605) such as a 5G network interface between the UAV and USS may use one of the following communication mechanisms or combination of some sort:
- Stateful or stateless. With a stateful communication, future data exchange may be carrying less data. With a stateless manner, each conversation may contain whole data payload.
- Connection-oriented or connectionless. The choice of connection style may depend on UAV system capability.

The frequency of querying the updated chart data while flying an UAV may depend on the configuration of UAV onboard system due to reasons of power saving or storage (404) limitation. However, near real time update may be recommended due to charts such as TFR/NOTAM may be issued without prior notice. In similar to ADS-B, a 30 second update may be sufficient.

A UAV pilot may not be particularly interested in the details that were obtained. Instead, the UAV pilot may well be mostly interested in an indication in the event the UAV's flight is, or has become, illegal. Thereafter, the UAV may conduct one or more operations, such as hold still, hold bearing, deviate from the original fly path, return to base immediately, crash immediately, or any other applicable instruction from USS or ATC.

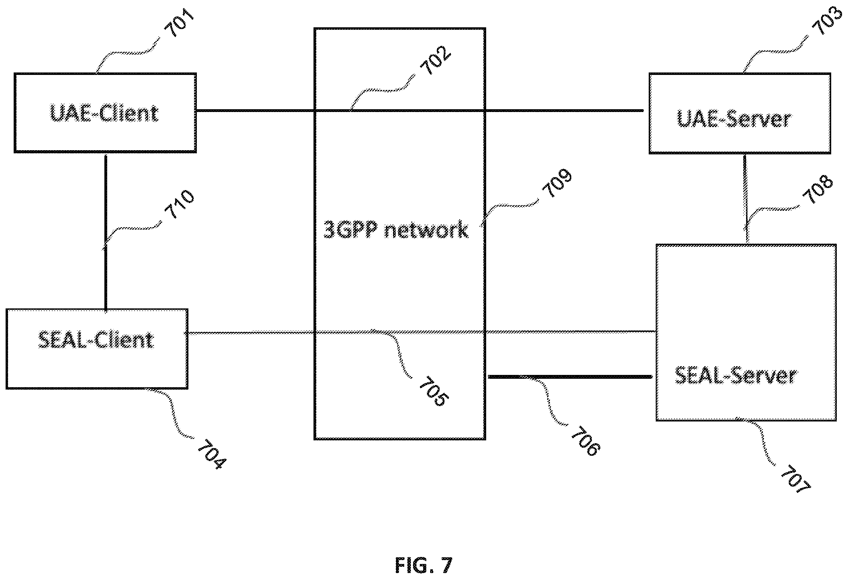

Referring now to FIG. 7, in the current 3GPP 5G wireless architecture, a SEAL (service enabler architecture layer for verticals) may provide procedures, information flows and APIs to support vertical applications over the 3GPP system to ensure efficient use and deployment of vertical applications over 3GPP systems. SEAL services include group management, configuration management, location management, identity management, key management, and network resource management. A UAS application enabler (UAE) layer offers the UAE capabilities to the UAS application-specific layer. A UAE layer may include a UAE client (701) and a UAE server (703). The UAE client and UAE server communicate with each other through the 3GPP network use a U1-AE (702) reference point.

The underneath SEAL services utilized by the upper UAE layer may include location management, group management, configuration management, identity management, key management, and network resource management.

The SEAL client(s) (704) communicates with the SEAL server(s) (707) through the 3GPP network over the SEAL-UU (705) reference points. SEAL-UU (705) supports both unicast and multicast delivery modes. The SEAL client(s) (701) provides the service enabler layer support functions to the UAE client(s) (701) over SEAL-C reference points (710). The UAE server(s) (703) communicate with the SEAL server(s) (707) over the SEAL-S (708) reference points. The SEAL server(s) (707) may communicate with the underlying 3GPP core network systems using the respective 3GPP interfaces (706) specified by the 3GPP network system.

The reference point (706) may include but not limited to the functions such as the network resource management server communicates with the PCRF (3GPP Policy and Charging Rules Function) or the network resource management server communicates with PCF (3GPP 5G Policy Control Function) to control the unicast and multicast resources from the underlying 3GPP network system.

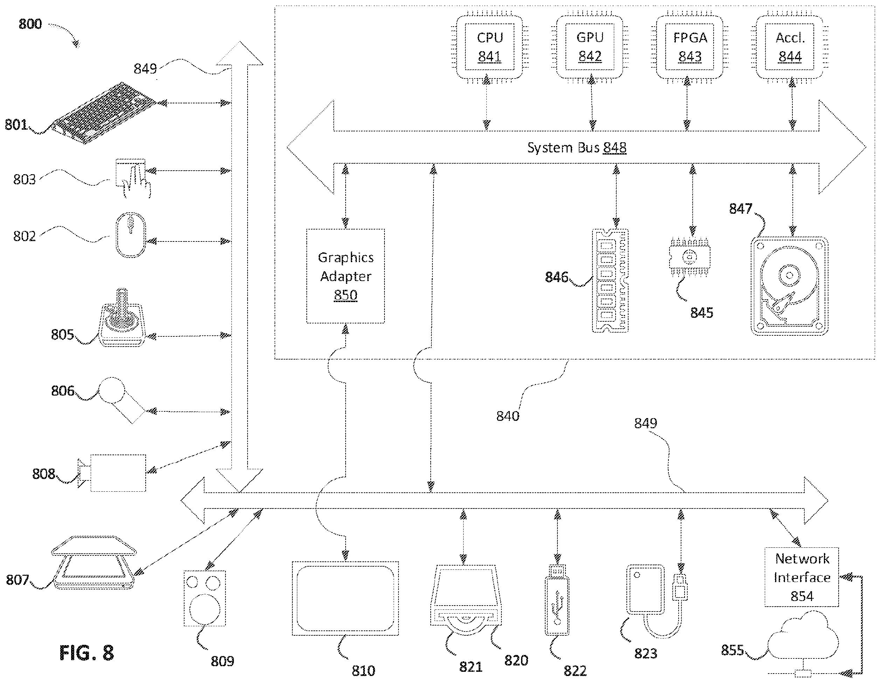

The techniques for Unmanned Aerial System Communication, described throughout, can be implemented in both controller and UAV as computer software using computer-readable instructions and physically stored in one or more computer-readable media. For example, FIG. 8 shows a computer system 800 suitable for implementing certain embodiments of the disclosed subject matter.

The computer software can be coded using any suitable machine code or computer language, that may be subject to assembly, compilation, linking, or like mechanisms to create code comprising instructions that can be executed directly, or through interpretation, micro-code execution, and the like, by computer central processing units (CPUs), Graphics Processing Units (GPUs), and the like.

The instructions can be executed on various types of computers or components thereof, including, for example, personal computers, tablet computers, servers, smartphones, gaming devices, internet of things devices, and the like.

The components shown in FIG. 8 for computer system 800 are exemplary in nature and are not intended to suggest any limitation as to the scope of use or functionality of the computer software implementing embodiments of the present disclosure. Neither should the configuration of components be interpreted as having any dependency or requirement relating to any one or combination of components illustrated in the exemplary embodiment of a computer system 800.

Computer system 800 may include certain human interface input devices. Such a human interface input device may be responsive to input by one or more human users through, for example, tactile input (such as: keystrokes, swipes, data glove movements), audio input (such as: voice, clapping), visual input (such as: gestures), olfactory input (not depicted). The human interface devices can also be used to capture certain media not necessarily directly related to conscious input by a human, such as audio (such as: speech, music, ambient sound), images (such as: scanned images, photographic images obtain from a still image camera), video (such as two-dimensional video, three-dimensional video including stereoscopic video).

Input human interface devices may include one or more of (only one of each depicted): keyboard 801, mouse 802, trackpad 803, touch screen 810, data-glove, joystick 805, microphone 806, scanner 807, camera 808.

Computer system 800 may also include certain human interface output devices. Such human interface output devices may be stimulating the senses of one or more human users through, for example, tactile output, sound, light, and smell/taste. Such human interface output devices may include tactile output devices (for example tactile feedback by the touch-screen 810, data-glove 804, or joystick 805, but there can also be tactile feedback devices that do not serve as input devices), audio output devices (such as: speakers 809, headphones (not depicted)), visual output devices (such as screens 810 to include CRT screens, LCD screens, plasma screens, OLED screens, each with or without touch-screen input capability, each with or without tactile feedback capability-some of which may be capable to output two dimensional visual output or more than three dimensional output through means such as stereographic output; virtual-reality glasses (not depicted), holographic displays and smoke tanks (not depicted)), and printers (not depicted).

Computer system 800 can also include human accessible storage devices and their associated media such as optical media including CD/DVD ROM/RW 820 with CD/DVD or the like media 821, thumb-drive 822, removable hard drive or solid state drive 823, legacy magnetic media such as tape and floppy disc (not depicted), specialized ROM/ASIC/PLD based devices such as security dongles (not depicted), and the like.

Those skilled in the art should also understand that term "computer readable media" as used in connection with the presently disclosed subject matter does not encompass transmission media, carrier waves, or other transitory signals.

Computer system 800 can also include interface to one or more communication networks. Networks can for example be wireless, wireline, optical. Networks can further be local, wide-area, metropolitan, vehicular and industrial, real-time, delay-tolerant, and so on. Examples of networks include local area networks such as Ethernet, wireless LANs, cellular networks to include GSM, 3G, 4G, 5G, LTE and the like, TV wireline or wireless wide area digital networks to include cable TV, satellite TV, and terrestrial broadcast TV, vehicular and industrial to include CANBus, and so forth. Certain networks commonly require external network interface adapters that attached to certain general purpose data ports or peripheral buses (849) (such as, for example USB ports of the computer system 800; others are commonly integrated into the core of the computer system 800 by attachment to a system bus as described below (for example Ethernet interface into a PC computer system or cellular network interface into a smartphone computer system). Using any of these networks, computer system 800 can communicate with other entities. Such communication can be uni-directional, receive only (for example, broadcast TV), uni-directional send-only (for example CANbus to certain CANbus devices), or bi-directional, for example to other computer systems using local or wide area digital networks. Certain protocols and protocol stacks can be used on each of those networks and network interfaces as described above.

Aforementioned human interface devices, human-accessible storage devices, and network interfaces can be attached to a core 840 of the computer system 800.

The core 840 can include one or more Central Processing Units (CPU) 841, Graphics Processing Units (GPU) 842, specialized programmable processing units in the form of Field Programmable Gate Areas (FPGA) 843, hardware accelerators for certain tasks 844, and so forth. These devices, along with Read-only memory (ROM) 845, Random-access memory 846, internal mass storage such as internal non-user accessible hard drives, SSDs, and the like 847, may be connected through a system bus 848. In some computer systems, the system bus 848can be accessible in the form of one or more physical plugs to enable extensions by additional CPUs, GPU, and the like. The peripheral devices can be attached either directly to the core's system bus 848, or through a peripheral bus 849. Architectures for a peripheral bus include PCI, USB, and the like.

CPUs 841, GPUs 842, FPGAs 843, and accelerators 844 can execute certain instructions that, in combination, can make up the aforementioned computer code. That computer code can be stored in ROM 845 or RAM 846. Transitional data can be also be stored in RAM 846, whereas permanent data can be stored for example, in the internal mass storage 847. Fast storage and retrieve to any of the memory devices can be enabled through the use of cache memory, that can be closely associated with one or more CPU 841, GPU 842, mass storage 847, ROM 845, RAM 846, and the like.

The computer readable media can have computer code thereon for performing various computer-implemented operations. The media and computer code can be those specially designed and constructed for the purposes of the present disclosure, or they can be of the kind well known and available to those having skill in the computer software arts.

As an example and not by way of limitation, the computer system having architecture 800, and specifically the core 840 can provide functionality as a result of processor(s) (including CPUs, GPUs, FPGA, accelerators, and the like) executing software embodied in one or more tangible, computer-readable media. Such computer-readable media can be media associated with user-accessible mass storage as introduced above, as well as certain storage of the core 840 that are of non-transitory nature, such as core-internal mass storage 847 or ROM 845. The software implementing various embodiments of the present disclosure can be stored in such devices and executed by core 840. A computer-readable medium can include one or more memory devices or chips, according to particular needs. The software can cause the core 840 and specifically the processors therein (including CPU, GPU, FPGA, and the like) to execute particular processes or particular parts of particular processes described herein, including defining data structures stored in RAM 846 and modifying such data structures according to the processes defined by the software. In addition or as an alternative, the computer system can provide functionality as a result of logic hardwired or otherwise embodied in a circuit (for example: accelerator 844), which can operate in place of or together with software to execute particular processes or particular parts of particular processes described herein. Reference to software can encompass logic, and vice versa, where appropriate. Reference to a computer-readable media can encompass a circuit (such as an integrated circuit (IC)) storing software for execution, a circuit embodying logic for execution, or both, where appropriate. The present disclosure encompasses any suitable combination of hardware and software.

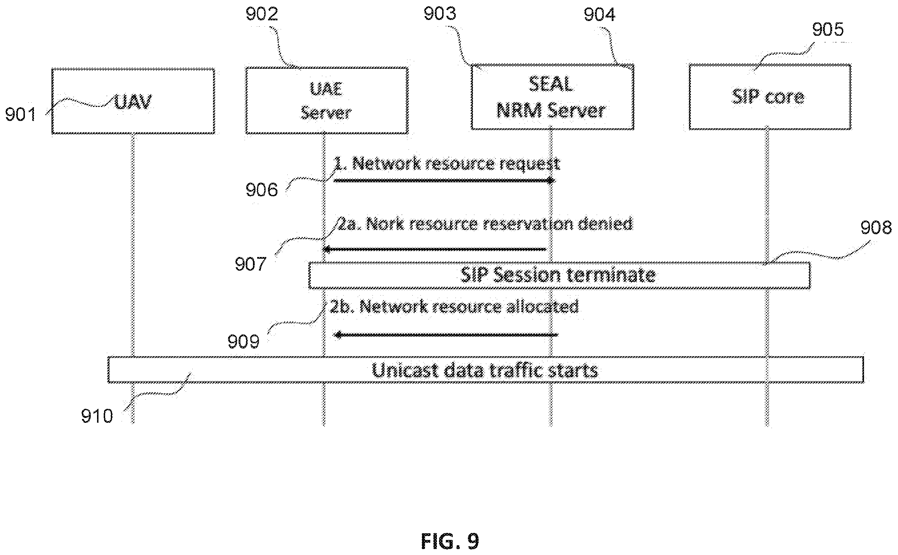

Referring now to FIG. 9, the UAV grouping function is managed by a SEAL group manager (GM) SIP core (905) that enables group management operations for the upper application layer.

The SEAL network resource manager (NRM) (904) on the SEAL NRM server (903) enables support for unicast and multicast network resource management the for upper application layer.

As mentioned above, a camera may be equipped on a UAV (901). Such media related device may also be called a UAV payload. The support of media sessions between UAV and other parties using network resources may be established. If such a session exists, the UAV payload may generate, transfer, or interact with data traffic with other parties. Events like live video streaming, file transfer, remote media control and etc.

In most real-time media communications, the combination of SIP and SDP is used for session initialization and media parameter negotiation. Both protocol data are carried in the control plane before real media traffic goes through the network. SDP is mostly carried as a SIP payload which includes all media codec related parameters. The purpose of SDP is to convey information about media streams and provide sufficient information to enable joining and participating in a media session in a unicast scenario.

The Session Initiation Protocol (SIP) is a signaling protocol used for initiating, maintaining, and terminating real-time sessions over Internet Protocol (IP) networks as well as a mobile network such as 4G LTE or 5G network.

The Session Description Protocol (SDP) is a protocol for describing media session parameters. It also is being used for negotiating media capabilities among media session participants. It is commonly used in a SIP payload. One of the important information carried in an SDP is the potential bandwidth usage for a particular media stream. For the use case of a UAV media-related payload, the knowledge of bandwidths that payload intends to use is important for resource allocation in a network.

In a 3GPP network, the SIP core may be in place to communicate with the 3GPP core network to initiate PCC (policy control and charge) function to request more network resources.

In most real-time media communications, the combination of SIP and SDP is used for session initialization and media parameter negotiation. Both protocol data are carried in the control plane before real media traffic goes through the network. SDP is mostly carried as a SIP payload which includes all media codec related parameters. The purpose of SDP is to convey information about media streams and provide sufficient information to enable joining and participating in a media session in a unicast scenario.

One of the important information carried in an SDP is the potential bandwidth usage for a particular media stream. For the use case of a UAV media-related payload, the knowledge of bandwidths that payload intends to use is important for resource allocation in the 3GPP network.

The solution proposed here provides the ability to monitor UAV media sessions and improve session manageability based on information from the SDP.

The SEAL network resource manager (NRM) (904) enables support for unicast and multicast network resource management the for upper application layer.

The 3GPP SEAL layer supports SIP for session establishment. This solution addresses how to use SEAL address UAV media session monitoring and management with the following pre-conditions: a UAV has established a SIP session between UAV media payload and external parties such as UAV-C or USS/UTM using the 3GPP core network; and SDP as SIP payload for media description.

Once a SIP session has been established and SDP has been exchanged, the UAE server may be informed about how much bandwidth it needs for this session.

The UAE server (902) may request network bandwidth resources (906) based on SDP's description for a SIP session by looking into the bandwidth requirement.

In the case where the SEAL NRM server (903) may not be able to accommodate the requested bandwidth resource (907), the SEAL NRM server (903) may choose to terminate the SIP session (908) Otherwise, (b) bandwidth may be allocated (909) and unicast traffic starts (910).

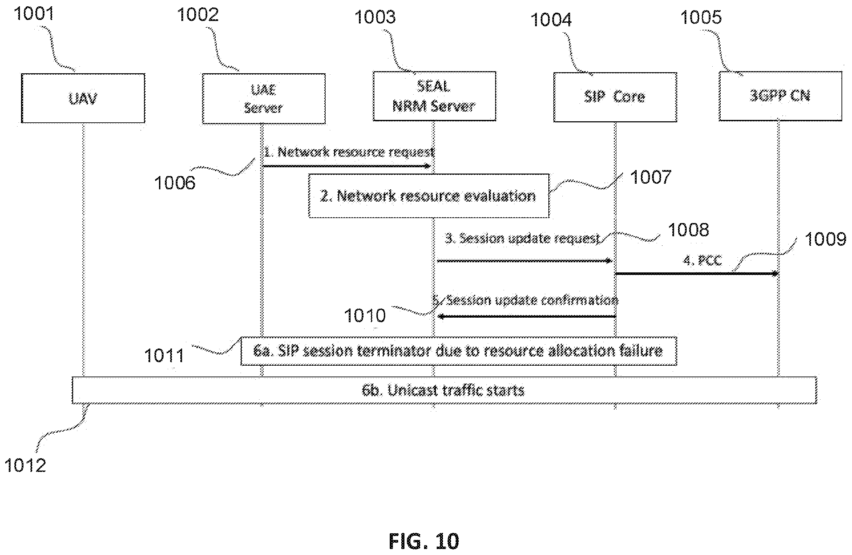

Referring now to FIG. 10, the UAE server (1002) may request network resources (1006) for the UAV (1001). In this case where the SEAL NRM server (1003) may evaluate the request (1007) and send session bandwidth requests (1008) to SIP Core (1004). The PCC is initiated to the 3GPP CN network (1005) for more resources (1009).

The SIP core may send recourse request status (1010) back to the SEAL NRM server. If the requested resource is not able to be allocated, the UAE server may decide to determine the SIP session (1011) otherwise (b) unicast traffic starts (1012).

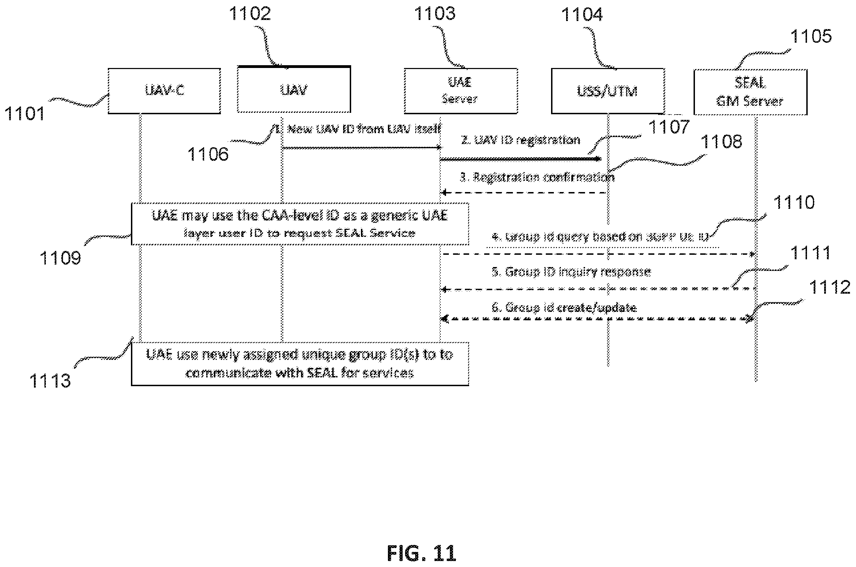

Referring now to FIG. 11, a UAV may be replaced and controlled by the existing UAC controller (UAV-C). Such a replacement may or may not be scheduled. Such a UAV replacement event may cause network and service interruption. A UAS may also connect to a USS/UTM using a 3GPP network, WIFI, internet, or other means of networking approach. Whichever way the connection happens, a USS/UTM may only use one identifier for communicating with the UAS. When UAV is replaced, the ID associated with the UAS may also be changed to a new ID. The USS may lose the control ability of a UAS due to ID change. UAV identification or a RID is an important component for a UAS to be considered safe to operate. In some cases, a UAV replacement in a UAS may cause the change of UAV ID which may cause network and service interruption.

In the 3GPP UAE layer, the UAV ID may be used to request network resources through SEAL. A 3GPP connected UAV may obtain a 3GPP UE ID when the connection is successful. Also, a 3GPP connected UAV must register with a USS/UTM per certain regulations with a pre- or dynamically assigned CAA-level UAV id as mentioned above. Whatever the case is, after the UAV being replaced, a new registration between a UAS and 3GPP network or a UAV to USS/UTM may be needed, which may have an impact on how SEAL provides specific services to a UAS. When a UAV has been replaced with a new CAA-level ID, a UAV ID registration may take place. In some cases, when a new UAV has a pre-assigned CAA-level ID, the following procedures may need to re-establish the connection between USS and UAV.

After UAV replacement in a UAS, the UAE server (1103) recognizes that there is a UAV replacement with a pre-assigned CAA-level UAV ID. The UAE server (1103) sends a registration request to the USS/UTM (1104) over the 3GPP network (1107). The USS/UTM (1104) may send back the registration confirmation (1108).

The UAE Server (1103) may start to use the CAA-level ID as a generic UAE layer user ID to request SEAL Service.

However, depending on the establishment of a group id using the previous pair of UAV and UAV-C, a group id may be created with the new UAV. Producers of group creation for one pair of UAV and UAV-C is explained. First of all, both UAV-C (1101) and UAV (1102) may have successfully connected to the UAE server with the new UAV ID.

UAE server (1103) recognizes a unique pair of UAV and UAV-C.

The UAE server sends a group creation request to the SEAL GM server (1105) using the GM-S reference link.

SEAL GM server may create one group ID for one pair of UAV and UAV-C. In some cases, subgroups may also be created for UAV and UAV-C respectively.

The UAE server may use the returned group ID(s) for QoS management. In cases where subgroups are created for UAV and UAV-C, the UAE server may use subgroup ID to manage QoS for UAV and UAV-C separately.

In some other cases, when a new UAV does not have a pre-assigned CAA-level ID. Then the USS/UTM may dynamically assign a CAA-level UAV ID to the new UAV during the registration process.

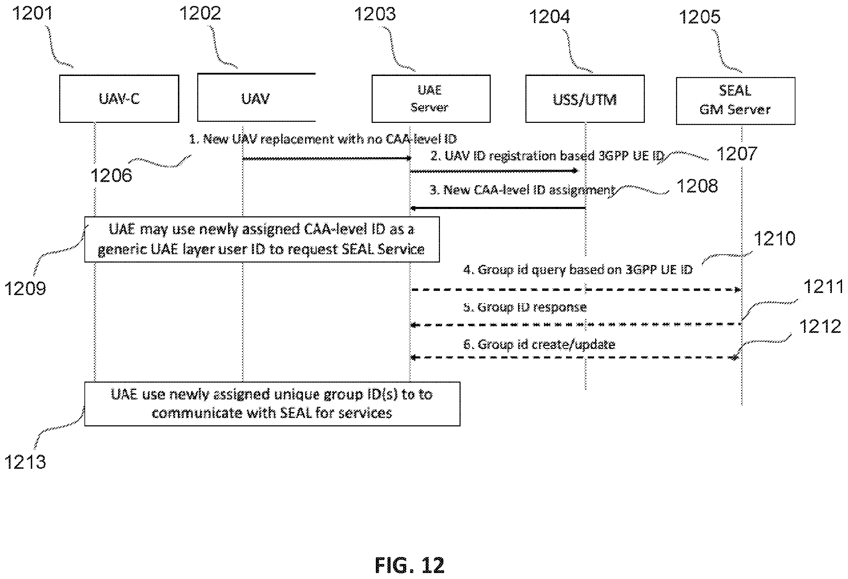

Referring now to Fig. 12, the UAE server (1203) recognizes a UAV replacement with no pre-assigned CAA-level UAV ID. The UAE server (1203) sends a registration request to the USS/UTM (1204) using a 3GPP network with a 3GPP UE ID (1207).

Now, in this case, the USS/UTM will return a registration confirmation with a new CAA-level ID assigned to this new UAV.

Similar to the previous case, a group id may be created if there was an existing group id for the previous pair of UAV (1202) and UAV-C (1201).

After UAV replacement in a UAS, the UAE server (1203) recognizes that there is a UAV replacement with a pre-assigned CAA-level UAV ID. The UAE server (1203) sends a registration request to the USS/UTM (1204) over the 3GPP network (1207). The USS/UTM (1204) may send back the registration confirmation (1208).

The UAE Server (1203) may start to use the CAA-level ID as a generic UAE layer user ID to request SEAL Service.

However, depending on the establishment of a group id using the previous pair of UAV and UAV-C, a group id may be created with the new UAV. Producers of group creation for one pair of UAV and UAV-C is explained. First of all, both UAV-C (1201) and UAV (1202) may have successfully connected to the UAE server with the new UAV ID.

UAE server (1203) recognizes a unique pair of UAV and UAV-C (1206).

SEAL GM server may create one group ID for one pair of UAV and UAV-C. In some cases, subgroups may also be created for UAV and UAV-C respectively).

The UAE server may use the returned group ID(s) for QoS management. In cases where subgroups are created for UAV and UAV-C, the UAE server may use subgroup ID to manage QoS for UAV and UAV-C separately.

In some other cases, when a new UAV does not have a pre-assigned CAA-level ID. Then the USS/UTM may dynamically assign a CAA-level UAV ID to the new UAV during the registration process.

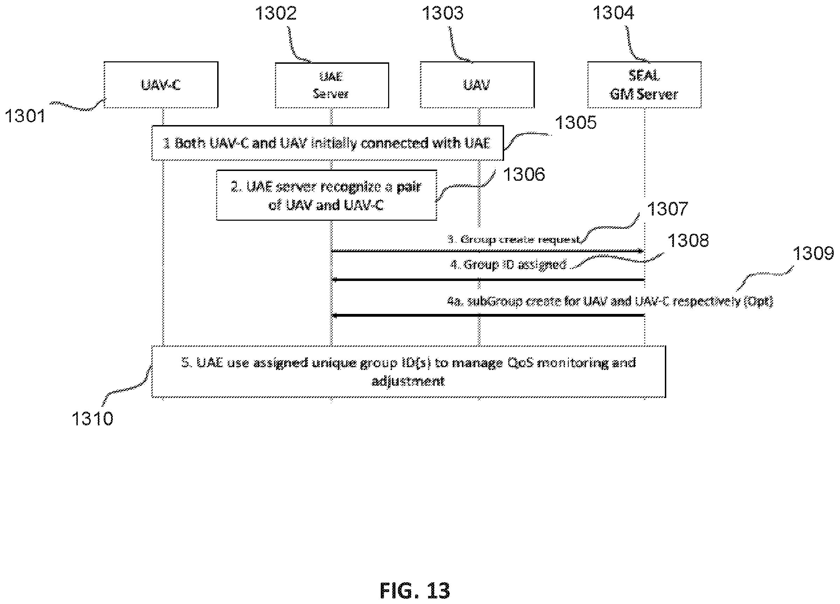

Referring now to Fig. 13, producers of group creation for one pair of UAV and UAV-C is explained. First of all, both UAV-C (1301) and UAV (1303) may have successfully connected to the UAE server with the new UAV ID (1305).

UAE server (1302) recognizes a unique pair of UAV and UAV-C (1306).

The UAE server sends a group creation request to the SEAL GM server (1304) using the GM-S reference link (1307).

SEAL GM server may create one group ID for one pair of UAV and UAV-C (1308). In some cases, subgroups may also be created for UAV and UAV-C respectively (1309).

The UAE server may use the returned group ID(s) for QoS management. In cases where subgroups are created for UAV and UAV-C, the UAE server may use subgroup ID to manage QoS for UAV and UAV-C separately (1310).

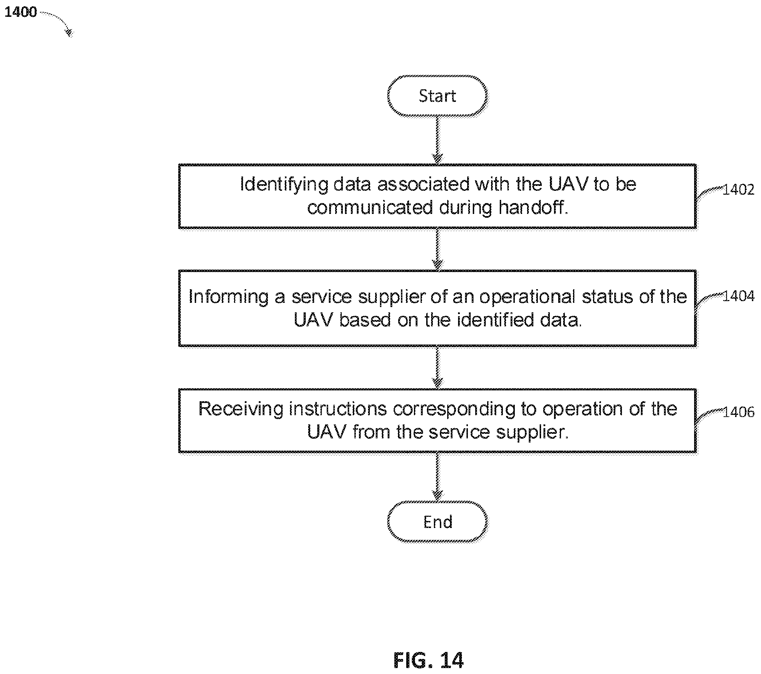

Referring now to FIG. 14, an operational flowchart illustrating the steps of a method 1400 for controlling an unmanned aerial vehicle (UAV) is depicted, compatible with embodiments of the presently claimed invention.

At 1402, the method 1400 includes identifying data associated with the UAV to be communicated during handoff.

At 1404, the method 1400 includes informing a service supplier of an operational status of the UAV based on the identified data.

At 1406, the method 1400 includes receiving instructions corresponding to operation of the UAV from the service supplier.

It may be appreciated that FIG. 14 provides only an illustration of one implementation compatible with embodiments of the presently claimed invention.

The presently claimed invention relates to a system, a method, and/or a computer readable medium at any possible technical detail level of integration. The computer readable medium may include a computer-readable non-transitory storage medium (or media) having computer readable program instructions thereon for causing a processor to carry out operations.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program code/instructions for carrying out operations may be assembler instructions, instruction-set-architecture (ISA) instructions, machine instructions, machine dependent instructions, microcode, firmware instructions, state-setting data, configuration data for integrated circuitry, or either source code or object code written in any combination of one or more programming languages, including an object oriented programming language such as Smalltalk, C++, or the like, and procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects or operations.

These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, methods, and computer readable media compatible with embodiments of the presently claimed invention. In this regard, each block in the flowchart or block diagrams may represent a module, segment, or portion of instructions, which comprises one or more executable instructions for implementing the specified logical function(s). The method, computer system, and computer readable medium may include additional blocks, or differently arranged blocks than those depicted in the Figures. In some alternative implementations, the functions noted in the blocks may occur out of the order noted in the Figures. For example, two blocks shown in succession may, in fact, be executed concurrently or substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

It will be apparent that systems and/or methods, described herein, may be implemented in different forms of hardware, firmware, or a combination of hardware and software. The actual specialized control hardware or software code used to implement these systems and/or methods is not limiting of the implementations. Thus, the operation and behavior of the systems and/or methods were described herein without reference to specific software code-it being understood that software and hardware may be designed to implement the systems and/or methods based on the description herein.

No element, act, or instruction used herein should be construed as critical or essential unless explicitly described as such. Also, as used herein, the articles "a" and "an" are intended to include one or more items, and may be used interchangeably with "one or more". Furthermore, as used herein, the term "set" is intended to include one or more items (e.g., related items, unrelated items, a combination of related and unrelated items, etc.), and may be used interchangeably with "one or more". Where only one item is intended, the term "one" or similar language is used. Also, as used herein, the terms "has", "have", "having", or the like are intended to be open-ended terms. Further, the phrase "based on" is intended to mean "based, at least in part, on" unless explicitly stated otherwise.

The descriptions of the various aspects and embodiments have been presented for purposes of illustration, but are not intended to be exhaustive or limited to the embodiments disclosed. Even though combinations of features are recited in the claims and/or disclosed in the specification, these combinations are not intended to limit the disclosure of possible implementations. In fact, many of these features may be combined in ways not specifically recited in the claims and/or disclosed in the specification. Many modifications and variations will be apparent to those of ordinary skill in the art without departing from the scope of the invention, which is defined by the appended claims. The terminology used herein was chosen to best explain the principles of the embodiments, the practical application or technical improvement over technologies found in the marketplace, or to enable others of ordinary skill in the art to understand the embodiments disclosed herein.

## Claims

1. A computer-implemented method of controlling an unmanned aerial vehicle (UAV) during a handoff between UAS service suppliers (USS), the method being performed by the UAV and comprising:
(a) while the UAV is en-route following a pre-defined flight path, identifying, for communication during a handoff from an initial UAS service supplier to a different UAS service supplier, a dataset comprising a current location associated with the UAV, a current altitude associated with the UAV, a current speed associated with the UAV, a usable power value expressed as a battery percentage, a destination in form of a current airspace allocation, and an onboard equipment list including payload;
(b) informing the different UAS service supplier of an operational status of the UAV based on the identified dataset by transmitting the dataset during the handoff;
(c) receiving, from the different UAS service supplier, instructions corresponding to operation of the UAV;
(d) determining compliance by comparing data collected onboard the UAV with the received instructions; and
(e) in dependence on the determining of (d), transmitting one of:
(e1) an acknowledgment message when the UAV complies with the received instructions, or
(e2) a feedback message identifying an operation misalignment when the UAV does not comply with the received instructions,
wherein the dataset of (a) and the messages of (e1) and (e2) are encoded in JavaScript Object Notation, JSON.

2. An unmanned aerial vehicle (UAV), comprising:
one or more computer-readable non-transitory storage media configured to store computer program code; and
one or more computer processors configured to access said computer program code and operate as instructed by said computer program code, said computer program code is configured to cause the one or more computer processors to perform the method according to claim 1.

3. A non-transitory computer readable medium having stored thereon a computer program for controlling an unmanned aerial vehicle (UAV), the computer program configured to cause one or more computer processors to perform the method according to claim 1.

## Patentansprüche

1. Ein computerimplementiertes Verfahren zum Steuern eines unbemannten Luftfahrzeugs (UAV) während einer Übergabe zwischen UAS-Dienstanbietern (USS), wobei das Verfahren durch das UAV ausgeführt wird und umfasst:
(a) während sich das UAV auf dem Weg entlang eines vordefinierten Flugpfads befindet, Identifizieren, für die Kommunikation während einer Übergabe von einem anfänglichen UAS-Dienstanbieter zu einem anderen UAS-Dienstanbieter, eines Datensatzes, der einen aktuellen Ort umfasst, der dem UAV zugeordnet ist, eine aktuelle Höhe, die dem UAV zugeordnet ist, eine aktuelle Geschwindigkeit, die dem UAV zugeordnet ist, einen nutzbaren Leistungswert, ausgedrückt als Batterieladezustand in Prozent, ein Ziel in Form einer aktuellen Luftraumzuteilung und eine Bordausrüstungsliste einschließlich Nutzlast;
(b) Informieren des anderen UAS-Dienstanbieters über einen Betriebsstatus des UAV auf der Grundlage des identifizierten Datensatzes durch Senden des Datensatzes während der Übergabe;
(c) Empfangen von Anweisungen vom anderen UAS-Dienstanbieter, die dem Betrieb des UAV entsprechen;
(d) Bestimmen der Übereinstimmung durch Vergleichen von an Bord des UAV erfassten Daten mit den empfangenen Anweisungen; und
(e) in Abhängigkeit von dem Bestimmen gemäß (d) Senden eines der folgenden:
(e1) einer Bestätigungsnachricht, wenn das UAV den empfangenen Anweisungen entspricht, oder
(e2) einer Rückmeldungsnachricht, die eine Betriebsabweichung identifiziert, wenn das UAV den empfangenen Anweisungen nicht entspricht,
wobei der Datensatz gemäß (a) und die Nachrichten gemäß (e1) und (e2) in JavaScript Object Notation, JSON, kodiert sind.

2. Ein unbemanntes Luftfahrzeug (UAV) umfassend:
ein oder mehrere computerlesbare nichtflüchtige Speichermedien, die zum Speichern von Computerprogrammcode konfiguriert sind; und
ein oder mehrere Computerprozessoren, die konfiguriert sind, auf den Computerprogrammcode zuzugreifen und gemäß dem Computerprogrammcode zu arbeiten, wobei der Computerprogrammcode konfiguriert ist, die ein oder mehreren Computerprozessoren dazu zu veranlassen, das Verfahren gemäß Anspruch 1 auszuführen.

3. Ein nichtflüchtiges computerlesbares Medium, auf dem ein Computerprogramm zum Steuern eines unbemannten Luftfahrzeugs (UAV) gespeichert ist, wobei das Computerprogramm konfiguriert ist, einen oder mehrere Computerprozessoren dazu zu veranlassen, das Verfahren gemäß Anspruch 1 auszuführen.

## Revendications

1. Procédé de commande d'un engin volant sans pilote embarqué (UAV), mis en œuvre par ordinateur pendant un transfert entre des fournisseurs de service UAS (USS), le procédé étant exécuté par l'UAV et comprenant:
(a) alors que l'UAV en route suit une trajectoire de vol prédéfinie, l'identification, pour la communication lors d'un transfert d'un fournisseur de services UAS initial à un autre fournisseur de services UAS, d'un ensemble de données comprenant une position actuelle associée à l'UAV, une altitude actuelle associée à l'UAV, une vitesse actuelle associée à l'UAV, une valeur de puissance utilisable exprimée en pourcentage de batterie, une destination se présentant sous la forme d'une allocation d'espace aérien actuelle et une liste d'équipements embarqués, y compris la charge utile;
(b) l'indication aux différents fournisseurs de services UAS de l'état opérationnel de l'UAV sur la base de l'ensemble de données identifié en transmettant l'ensemble de données lors du transfert;
(c) la réception, en provenance des différents fournisseurs de services UAS, des instructions correspondant au fonctionnement de l'UAV;
(d) la vérification de la conformité en comparant les données collectées à bord de l'UAV avec les instructions reçues; et
(e) en fonction de la détermination de (d), la transmission de l'un parmi:
(e1) un message d'accusé de réception lorsque l'UAV se conforme aux instructions reçues, ou
(e2) un message de rétroaction identifiant un désalignement opérationnel lorsque l'UAV ne se conforme pas aux instructions reçues,
dans lequel l'ensemble de données de (a) et les messages de (e1) et (e2) sont codés en notation objet issue de JavaScript, JSON.

2. Engin volant sans pilote embarqué (UAV), comprenant:
un ou plusieurs supports d'enregistrement non transitoires lisibles par ordinateur, configurés pour stocker un code de programme informatique; et
un ou plusieurs processeurs informatiques configurés pour accéder audit code de programme informatique et pour fonctionner selon les instructions dudit code de programme informatique, ledit code de programme informatique est configuré pour amener le ou les processeurs informatiques à mettre en œuvre le procédé selon la revendication 1.

3. Support lisible par ordinateur non transitoire sur lequel est stocké un programme informatique permettant de commande un engin volant sans pilote embarqué (UAV), le programme informatique étant configuré pour amener un ou plusieurs processeurs informatiques à mettre en œuvre le procédé selon la revendication 1.
